# EUROPÄISCHE PATENTSCHRIFT

(11) **EP 2 876 181 B1**
(45) Veröffentlichungstag und Bekanntmachung des Hinweises auf die Patenterteilung: **03.04.2019**
(21) Anmeldenummer: 13194320.1
(22) Anmeldetag: 25.11.2013
(51) Int. Cl.: C23C 2/06, B62D 21/00, B62D 29/00, C23C 2/38

(54) **Festigkeitserhöhung von Formrohrteilen**
Increase of the strength of shaped tubular parts
Augmentation de la résistance de pièces tubulaires

(43) Veröffentlichungstag der Anmeldung: 27.05.2015
(73) Patentinhaber: Rheinmetall MAN Military Vehicles Österreich GesmbH, 1230 Wien (AT)
(72) Erfinder: Trink, Mario, 2272 Ringelsdorf (AT)
(74) Vertreter: Horn Kleimann Waitzhofer Patentanwälte PartG mbB

(56) Entgegenhaltungen:
- DE-A1-102007 056 404
- DE-A1-102008 027 169

## Beschreibung

Die Erfindung beschäftigt sich mit einem Verfahren zur Festigkeitserhöhung von Formrohrteilen bzw. einer Formrohrkonstruktion insbesondere von Fahrzeugteilen oder Baugruppen eines Nutzfahrzeuges.

Hohlprofilelemente und diverse Halterungen etc. werden insbesondere bei Fahrzeugen durch Schweißverbindungen miteinander verfügt. Zur Verbindung kommen verschiedene Schweißarten in Betracht, wie Schmelzschweißen, Laserschweißen, Reibschweißen etc. wie der DE 10 2005 028 092 A1 entnommen werden kann.

Verschweißte Profilelemente zum Befestigen einer Stoßstange in Längsträgern eines Fahrzeuges offenbart die DE 10 2006 040 178 B3. Die Korrosion zwischen einem Profilelement aus Aluminium und einem Stahlträger wird dadurch verhindert, dass die Wandungen des Steckabschnitts des aus dem Leichtmetallwerkstoff des geformten Profilelements mit ihrer Eckkante in einem Steckorgan mit Korrosion an benachbarten Flächen aus Leichtmetalllegierungen einerseits und der Eisenkohlenstofflegierungen andererseits angeordnet sind, wobei der Steckabschnitt mit dem Steckorgan in den Längsträger eingeschoben werden kann. Dadurch wird eine Schutz- bzw. Trennschicht zwischen beiden Profilelementen gebildet.

Einen Fahrzeugrahmen beschreibt die DE 10 2007 056 404 A1. Hierbei wird mittels einer Vielzahl von Schienen und Streben die Drehsteifigkeit erhöht, um im Fall eines Aufpralls Energie zu absorbieren und die oberen und unteren Schienen zu stabilisieren.

Ein Fahrzeugrahmenmontageverfahren und ein entsprechender Rahmen wird mit der DE 10 2008 005 341 A1 publiziert. Dabei wird ein Fahrzeugrahmen aus mehreren Komponenten montiert, die jeweils aus einem einzigen Metallstück bestehen etc. Dazu werden eine erste Fahrzeugrahmenkomponente und eine zweite Fahrzeugrahmenkomponente permanent durch eine Schweißstelle verbunden, wie beispielsweise mittels Punktschweißen. Erreicht werden soll die Verbesserung des mehrteiligen Karosserieseiten-Montageverfahrens bei Verbesserung der Wasserdichtheit und der Reduzierung der Windgeräusche.

Aus der DE 10 2012 214 558 A1 ist eine Fahrzeugrahmenanordnung sowie ein Herstellungsverfahren bekannt, mit dem Strukturelemente aus verschiedenen Materialien verbunden werden, um eine Fahrzeugrahmenanordnung herzustellen.

Nachteilig bei derartig hergestellten Fahrzeugrahmen ist, dass entweder zusätzliche Korrosionsschutzmaßnahmen notwendig sind bzw. diverse zusätzliche Versteifungen vorgesehen sind.

Hier greift die Erfindung die Aufgabe auf, derartige Nachteile an Fahrzeugrahmen oder Formrohrteilen etc. zu minimieren.

Gelöst wird die Aufgabe durch die Merkmale des Patentanspruchs 1. Vorteilhafte Ausgestaltungen sind dem abhängigen Anspruch entnehmbar. Erfindungsgemäße Formrohrteile sind in Anspruch 3 beansprucht.

Der Erfindung liegt die Idee zugrunde, mit nur einer Maßnahme zum Beispiel das Problem der Korrosion als auch der Drehsteifigkeit zu bewerkstelligen, d.h., dieses auf einfache Art und Weise zu lösen. Dabei wird von einem mittels Loch- oder Punktschweißen zusammengebauten Formrohrteil bzw. einer Formrohrbaugruppe ausgegangen, die als gesamte zusammengeschweißte Formrohrkonstruktion komplett in einem Tauchbad feuerverzinkt wird (Feuerverzinken).

Aus der DE 10 2005 037 978 A1 ist ein Verfahren zur Herstellung von feuerverzinkten vergüteten Stahl-Tragstrukturen für Kraftfahrzeuge bekannt. Das Feuerverzinken bewirkt dabei, dass die Stahloberfläche blank geglüht wird.

Die DE 10 2008 027 169 A1 zeigt ein Fahrwerksbauteil eines Kraftfahrzeugs, mit wenigstens einem Hohlkörper aus einem korrosionsgefährdeten Material, der einen Hohlraum enthält. Die Innenflächen des Hohlkörpers lassen sich effektiv vor Korrosion schützen, wenn der Hohlraum flüssigkeitsdicht und feuchtigkeitsdicht verschlossen ist.

Anders das eigene Verfahren. Das im Tauchbad verflüssigte Zink dringt in vorhandene Spalten und Ritzen der Konstruktion ein und verlötet sämtliche Einzelkomponenten der Konstruktion zusätzlich zu den Lochschweißungen und/oder Punktschweißungen. Dadurch entsteht nicht nur ein nahtloser Korrosionsschutz der Konstruktion, sondern die Konstruktion wird erheblich steifer. Die aufgetragene Zinkschicht wirkt insbesondere im Bereich von Blechnähten und Überlappungen an Fugen als verbindendes und tragendes Element. Der Effekt ist eine Erhöhung der Torsionssteifigkeit der Konstruktion, die sich wesentlich verbessert. Die Blechdicke kann bei gleicher Belastbarkeit reduziert werden, was zu einer Gewichtsreduktion führt bzw. beiträgt. Die Zinkschicht bzw. der Zinküberzug kann in Abhängigkeit von Anforderung und Erfahrung gewählt werden, z.B. anhand der DIN EN ISO 1461 (*www.bauforumstahl.de*/*korrosionsschutzfeuerverzinkung*). Sichergestellt wird zudem, dass keine Überhitzung der Rohrkonstruktion stattfindet, um ein Verziehen der Rohrkonstruktion zu vermeiden.

Anhand eines vereinfacht dargestellten Ausführungsbeispiels mit Zeichnungen soll die Erfindung näher erläutert werden.

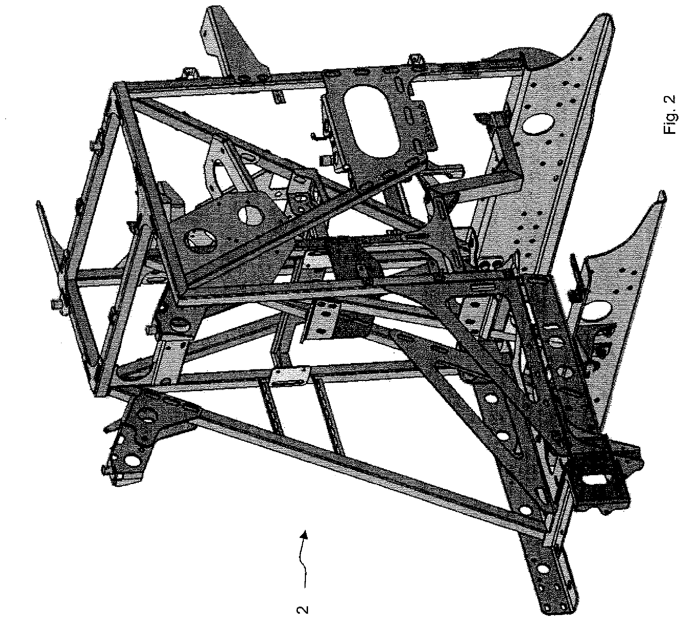

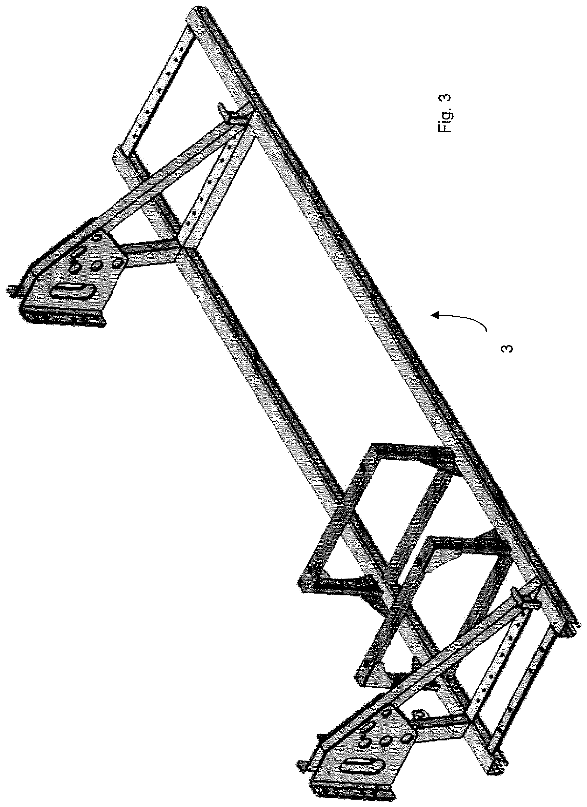

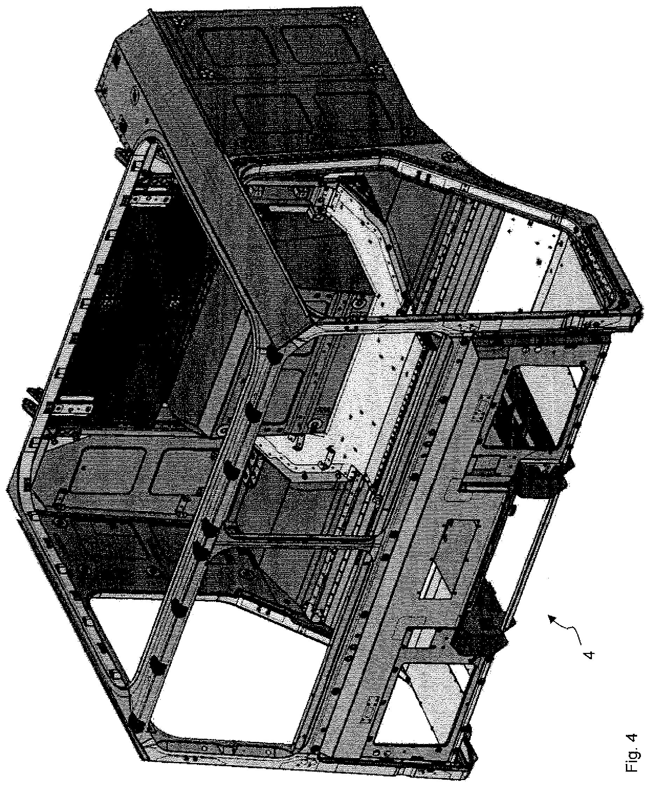

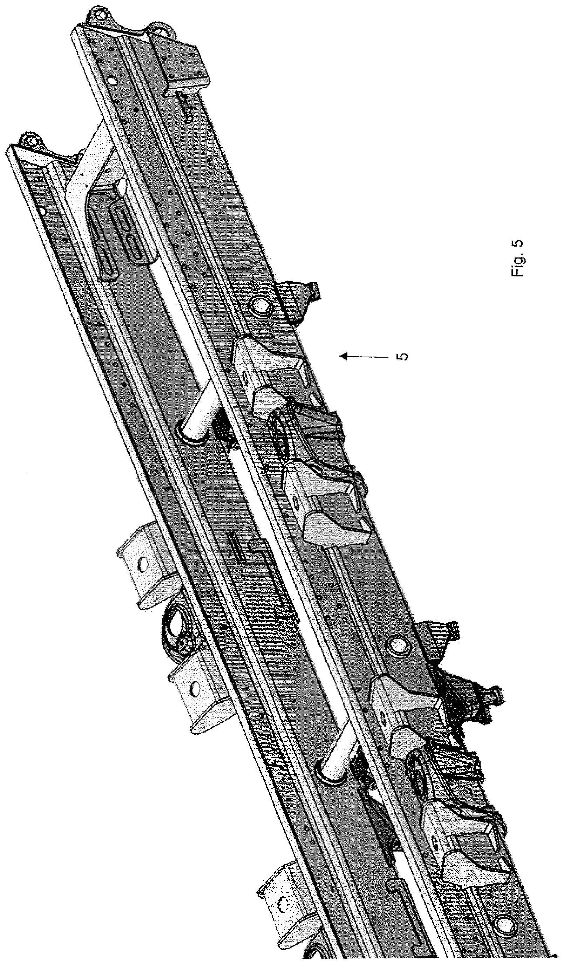

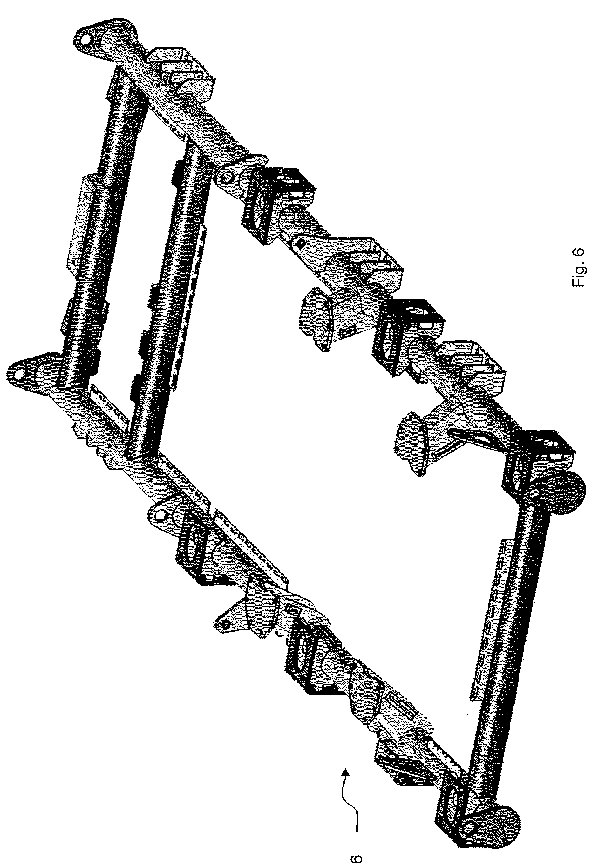

Es zeigen die Figuren diverse Formrohrteile eines Fahrzeuges, deren Festigkeit mittels eines nicht näher dargestellten, da bekannten Zink-Tauchbades in einer großen Anlage erhöht werden kann. Es zeigten die Fig. 1, einen Reserveradkasten 1, Fig. 2 ein Kühlergestell 2, Fig. 3 ein Tragegestell 3, Fig. 4 ein Fahrerhaus 4, Fig. 5 einen Rahmen 5 und Fig. 6 einen Motortragblock 6, alles Teile bzw. Baugruppen eines Nutzfahrzeuges. Diese Baugruppen 1 bis 6 sind aus diversen Einzelteilen 7 zusammengefügt und verschweißt worden.

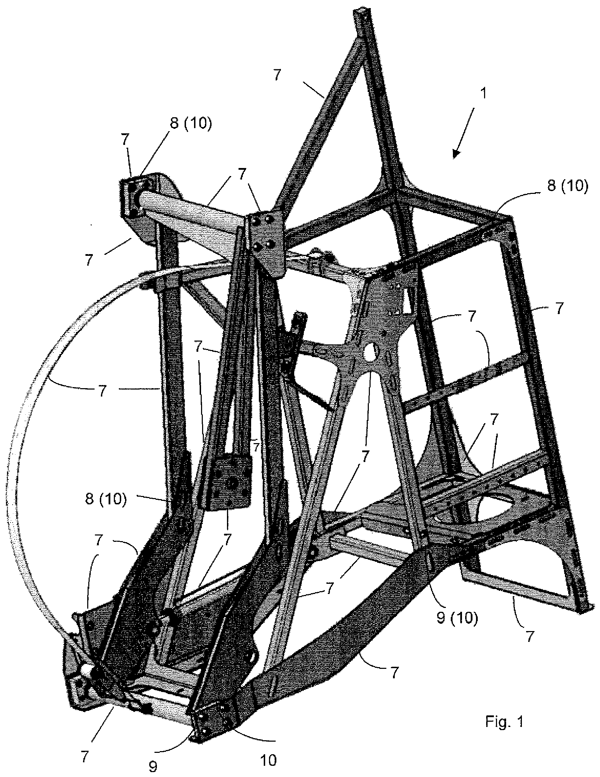

Zur Erhöhung der Festigkeit werden derartige Baugruppen 1 bis 6 mittels einer Trägereinheit in das Zink-Tauchbad eingebracht. Das im Tauchbad verflüssigte Zink 10 dringt in vorhandene Spalte 8 und Ritzen 9 der Baugruppen 1 bis 6 ein und verlötet sämtliche Einzelkomponenten der Konstruktion zusätzlich zu den Lochschweißungen und/oder Punktschweißungen etc. (nur angedeutet und beziffert in Fig. 1).

Um zu vermeiden, dass sich das Zink 10 an den Stellen ansetzt, an denen es ungewollt ist, können diese Stellen und Bereiche abgeklebt werden.

## Patentansprüche

1. Verfahren zur Festigkeitserhöhung, insbesondere zur Erhöhung der Torsionssteifigkeit, von Formrohrteilen (1 - 6), insbesondere von Fahrzeugteilen oder Baugruppen eines Nutzfahrzeuges, die durch Lochschweißungen und/oder Punktschweißungen aus Einzelkomponenten (7) zusammengefügt worden sind, wobei nach dem Lochschweißen und/oder Punktschweißen die Formrohrteile (1 - 6) in ein Zink-Tauchbad eingebracht werden, wobei das in dem Zink-Tauchbad verflüssigte Zink (10) in vorhandene Spalte (8) und Ritzen (9) eindringt und sämtliche Einzelkomponenten (7) zusätzlich verlötet.

2. Verfahren nach Anspruch 1, **dadurch gekennzeichnet, dass** eine aufgetragene Zinkschicht im Bereich von Blechnähten und Überlappungen an Fugen als verbindendes und tragendes Element wirkt.

3. Formrohrteile (1 - 6), insbesondere Fahrzeugteile und Baugruppen eines Nutzfahrzeuges, hergestellt nach dem Verfahren nach Anspruch 1 oder 2.

## Claims

1. Method for increasing the strength, in particular for increasing the torsional stiffness, of shaped tubular parts (1 - 6), in particular of vehicle parts or assemblies of a commercial vehicle, which have been joined together from individual components (7) by plug welds or spot welds, wherein, after the plug welding and/or spot welding, the shaped tubular parts (1 - 6) are introduced into a zinc immersion bath, wherein the liquefied zinc (10) in the zinc immersion bath penetrates into gaps (8) and cracks (9) that are present and additionally solders all of the individual components (7).

2. Method according to Claim 1, **characterized in that** an applied zinc layer in the region of metal seams and overlaps at joints acts as a connecting and supporting element.

3. Shaped tubular parts (1 - 6), in particular vehicle parts and assemblies of a commercial vehicle, produced by a method according to Claim 1 or 2.

## Revendications

1. Procédé d'augmentation de la résistance, notamment de la rigidité en torsion, de pièces tubulaires (1 - 6), en particulier de pièces de véhicules ou de modules de véhicules utilitaires formés de composants individuels (7) assemblés par soudage en bouchon ou soudage par points, les pièces tubulaires (1 - 6) étant immergées dans un bain de zinc après le soudage en bouchon ou le soudage par points, le zinc liquide (10) du bain de zinc pénétrant dans des interstices (8) et des fentes (9) et soudant encore tous les composants individuels (7).

2. Précédé selon la revendication 1, **caractérisé en ce que** la couche de zinc appliquée au niveau de cordons de tôle et de superpositions sur des joints agit comme élément de liaison et de support.

3. Pièces tubulaires (1 - 6), en particulier pièces de véhicules ou modules de véhicules utilitaires, réalisées en recourant au procédé selon les revendications 1 ou 2.
